# EUROPÄISCHE PATENTSCHRIFT

(11) **EP 2 282 862 B1**
(45) Veröffentlichungstag und Bekanntmachung des Hinweises auf die Patenterteilung: **17.10.2012**
(21) Anmeldenummer: 09741931.1
(22) Anmeldetag: 09.03.2009
(51) Int. Cl.: B23D 47/02, B27B 5/16

(54) **ARBEITSTISCH FÜR WERKZEUGMASCHINEN**
WORK BENCH FOR MACHINE TOOLS
TABLE DE TRAVAIL POUR MACHINES-OUTILS

(30) Priorität: 09.05.2008 DE 102008001692
(43) Veröffentlichungstag der Anmeldung: 16.02.2011
(73) Patentinhaber: Robert Bosch GmbH, 70442 Stuttgart (DE)
(72) Erfinder: FUCHS, Rudolf, 73765 Neuhausen (DE)
(86) Internationale Anmeldenummer: PCT/EP2009/052708
(87) Internationale Veröffentlichungsnummer: WO 2009/135713

(56) Entgegenhaltungen:
- WO-A-93/18894
- DE-A1- 19 508 044
- US-A- 4 248 115
- US-A- 4 410 023

## Beschreibung

Die Erfindung betrifft einen Arbeitstisch für Werkzeugmaschinen, insbesondere Kreis- und/oder Kappsägen, gemäß dem Oberbegriff des Anspruches 1.

### Stand der Technik

Arbeitstische der vorgenannten Art sind aus der Praxis bekannt. Ihre die Tischebene bestimmende Tischfläche bildet die Auflage für der Säge zuzuführende Werkstücke. Um auch bei großen, oft unhandlichen Werkstücken die erforderliche sichere und/oder exakte Handhabung des Werkstückes zu gewährleisten, sind Werkstückauflagen entsprechender Größe erforderlich. Der Größe der Tischfläche eines jeweiligen Arbeitstisches sind aber in der Praxis nicht nur dadurch Grenzen gesetzt, dass auch Werkstücke kleinerer Dimension zu handhaben sein müssen und hierfür das innerhalb der Tischfläche liegende Werkzeug für den das Werkstück führenden Benutzer in dessen Zugriffsbereich liegen muss.

Bei transportablen, nicht stationär eingesetzten Arbeitstischen, wie sie im Handwerksbereich insbesondere für Arbeiten vor Ort, vor allem aber im Hobbybereich eingesetzt werden, kommt hinzu, dass die geforderte Mobilität Schranken in Bezug auf Größe und Gewicht setzt.

Dem wird bei bekannten Arbeitstischen dadurch Rechnung getragen, dass diese hinsichtlich der Größe der Werkstückauflage variabel gestaltet werden, und zwar insbesondere durch Tischverlängerungen und/oder Tischverbreiterungen, die durch an die entsprechenden, die Tischfläche begrenzenden Tischkanten anschließende Verlängerungs- und/oder Verbreiterungsteile als zur Tischfläche parallel liegende Werkstückabstützungen gebildet werden. So sind große, gegebenenfalls auch flächengeschlossene Werkstückauflagen zu erreichen, aber um den Preis von in Größe und Gewicht der Vergrößerungsfläche entsprechenden Werkstückabstützungen.

Zur Vergrößerung der Werkstückauflage ist es ausgehend von gegebenen Tischflächen auch bekannt, Randbereiche der Werkstückauflage durch Verlängerungs- und/oder Verbreiterungsteile zu bilden, die zu dem zentral feststehenden, die Tischfläche bildenden Teil ausziehbar sind und im ausgezogenen Zustand abgesetzt zur zentralen Tischfläche liegende Werkstückabstützungen bilden. Eine solche Ausgestaltung führt zu einem im Grundaufbau komplizierten und schweren Arbeitstisch und schränkt die mobile Nutzbarkeit desselben ein.

Zur Vergrößerung der Werkstückauflage ist es des Weiteren bekannt, den Arbeitstisch mit einem in Höhe der Tischfläche seitlich auskragenden Ausleger als zur Tischfläche paralleler Werkstückabstützung zu versehen. Dem auskragenden Ausleger ist an seinem freien Ende ein Stützbein zugeordnet, das gegen den Ausleger einschwenkbar ist, so dass sich zwar in zusammengelegtem Zustand eine verhältnismäßig kleine Baueinheit ergibt, über diese Baueinheit aber auch nur eine Werkstückauflage erreichen lässt, die der jeweiligen Montagelage der Werkstückabstützung zur Tischfläche entspricht.

Ein über ein bodenseitig abgestütztes Untergestell getragener Arbeitstisch der eingangs genannten Art ist aus der WO 93/1894 A bekannt und umfasst als Teile seiner Werkstückauflage eine Tischfläche und zumindest eine seitlich außerhalb der Tischfläche liegende, separate Werkstückabstützung. Die jeweilige Werkstückabstützung ist ebenfalls bodenseitig abgestützt und über eine Querabstützung am Untergestell gegenüber dem Arbeitstisch positionierbar, wobei die jeweilige Querabstützung zu einem der Beine des Untergestells drehlagenveränderlich angeordnet ist.

Ferner ist aus der DE 195 08 044 A1 eine Kreissägeeinheit mit einem Drehtisch bekannt, der zwischen seitlich auskragenden Teilen einer Grundplatte auf dieser aufsitzt und eine zur Grundplatte erhabene Tischfläche aufweist. Im Bereich von beiderseits des Drehtisches über diesen auskragenden Teilen der Grundplatte sind auf dieser Schwenkarme gelagert, die als verschwenkbare Werkstückabstützungen ergänzend zur Tischfläche Teile der Werkstückauflage bilden. Der Oberbegriff von Anspruch 1 basiert auf diesen Dokument.

Aus der US 4,428,115 A ist es zur Verbreiterung der durch die Tischfläche des Arbeitstisches einer Kreissäge gebildeten Werkstückauflage bekannt, eine längsseits des Arbeitstisches verlaufende Schiebeführung für eine tischartige Arbeitstischverbreiterung vorzusehen, die im Bereich ihrer vom Arbeitstisch abgelegenen Längskante über einen Schwenkarm abgestützt ist, der seinerseits gegen das Gestell des Arbeitstisches in dessen frontseitigem, zur Arbeitstischverbreiterung benachbarten Eckbereich angelenkt ist. Der Schwenkarm ist als Gliederarm ausgebildet, so dass sich durch Verschwenken des Armgliedes gegeneinander die der Verschiebestellung der Arbeitstischverbreiterung erforderliche Stützlänge ergibt.

### Offenbarung der Erfindung

Der Erfindung liegt die Aufgabe zugrunde, eine in ihrer Größe variable Werkstückauflage durch eine einfache, platzsparende und universell einsetzbare Werkstückabstützung zu schaffen.

Gemäß der Erfindung wird dies mit den Merkmalen des Anspruches 1 erreicht. Die Unteransprüche geben zweckmäßige Weiterbildungen an.

Durch die parallel zur Tischfläche ausschwenkbare Anordnung der Werkstückabstützung am Arbeitstisch mittels Schwenkarmen ist für die Werkstückabstützungen außerhalb der Tischfläche ein weiter Verstellbereich gegeben, wobei je nach Bedarf für das jeweilige Werkstück unterschiedliche Stützpositionen angefahren und festgelegt sowie die Werkstückabstützungen auch dem Werkstück folgend, also mitlaufend genutzt werden können, so dass jeweiligen, in Bezug auf die Führung des Werkstückes gegebenen Anforderungen Rechnung getragen werden kann.

Hierbei können die Werkstückabstützungen bei geringem Aufwand auch für große Auflagedistanzen zum Werkstück genutzt werden, zumal über die Werkstückabstützungen punktuell zur Stabilisierung des Werkstücks geeignete Stützpunkte angefahren werden können.

In Anpassung an ein jeweiliges Werkstück gegebenen Abstützerfordernissen wird durch die Anordnung mehrerer Werkstückabstützungen, insbesondere zwei Werkstückabstützungen am Arbeitstisch Rechnung getragen. Die jeweilige Positionierung am Arbeitstisch kann zudem bei geringem konstruktiven Aufwand an den jeweiligen Einsatzfall angepasst vorgenommen werden.

Die Verbindung der Werkstückabstützungen mit dem Arbeitstisch über ihre Schwenkarme schafft darüber hinaus die Voraussetzungen, die Werkstückabstützungen insgesamt raumsparend auszubilden sowie auch in eine zur Aufbewahrung und/oder zum Transport des Arbeitstisches vorgesehene Lage zu überführen, wobei sich die Werkstückabstützungen nicht nur, falls gewünscht, vom Arbeitstisch separieren und gegebenenfalls eigenständig transportieren lassen, sondern auch raumsparend und aufgrund des geringen Gewichtes gegebenenfalls zusammen mit dem Arbeitstisch.

In Verbindung mit der Lagerung der Schwenkarme zum Arbeitstisch in einem der Eckbereiche des Arbeitstisches erfolgt die lagernde Abstützung der insbesondere zwei Schwenkarme in einer gemeinsamen, tischseitigen Lagerung, wobei die Schwenkarme in ihrer Winkellage bezogen auf die Schwenkachse zueinander verstellbar, insbesondere auch einstellbar und untergreifend zur Tischebene mit der Lagerung verbunden sind.

Die Lagerung kann bevorzugt auskragend, in den Eckbereichen der Tischfläche vorgesehen sein, so dass sich besonders große Schwenkbereiche realisieren lassen, wobei für die Verbindung zum Arbeitstisch einfache Bolzenverbindungen genutzt werden können.

So können die Schwenkarme zum Beispiel auf einem Lagerbolzen befestigt sein und in Richtung auf ihre zugeordnete Werkstückabstützung nach oben abgekröpft verlaufen, wobei sowohl in der Lagerung wie auch in der Verbindung der Werkstückabstützungen zum Schwenkarm eine Höhenverstellbarkeit vorgesehen sein kann, inbsbesondere zur Anpassung der Höhenlage der Werkstückabstützungen an die jeweiligen Gegebenheiten des Werkstückes.

Im Rahmen der Erfindung kann der einer Werkstückabstützung zugeordnete Schwenkarm ein- oder mehrgliedrig ausgebildet werden, wobei bei mehrgliedriger Ausbildung zumindest zwei der aufeinander folgenden Glieder des Schwenkarmes gelenkig verbunden sind, so dass schon über die Mehrgliedrigkeit des Schwenkarmes eine dem Werkstück verspannungsfrei folgend mitlaufende Abstützung zu realisieren ist.

Der jeweilige Schwenkarm kann zudem bei eingliedriger Ausbildung, oder bei mehrgliedriger Ausbildung bezüglich mindestens eines seiner Glieder, längenverstellbar, insbesondere teleskopisch ausgebildet sein, und zwar mit Vorteil auch im Hinblick auf eine dem Werkstück verspannungsfrei folgend mitlaufende Abstützung, wie auch im Hinblick auf die Reduzierung der Abmaße der Werkstückabstützung mit zugehörigem Schwenkarm für Transportzwecke.

Die Werkstückabstützung als solche kann im Rahmen der Erfindung als Stützglied insbesondere nach Art eines Stütz- oder Schwenktellers ausgebildet sein, der zum Schwenkarm bevorzugt drehbar, insbesondere aber gelenkig und/oder höhenfest, oder auf eine vorgegebene Höhenlage einstellbar abgestützt ist.

Gegebenenfalls kann auch der Schwenkarm selbst Teil der Werkstückauflage sein oder zumindest einen Teil der Werkstückauflage bilden. Bildet der Schwenkarm lediglich einen Teil der Werkstückauflage, so wird diese im Weiteren durch die Tischfläche oder die Werkstückabstützung und die Tischfläche gebildet.

Weitere Vorteile und zweckmäßige Ausführungen sind den Ansprüchen, der Figurenbeschreibung und den Zeichnungen zu entnehmen. Es zeigen:

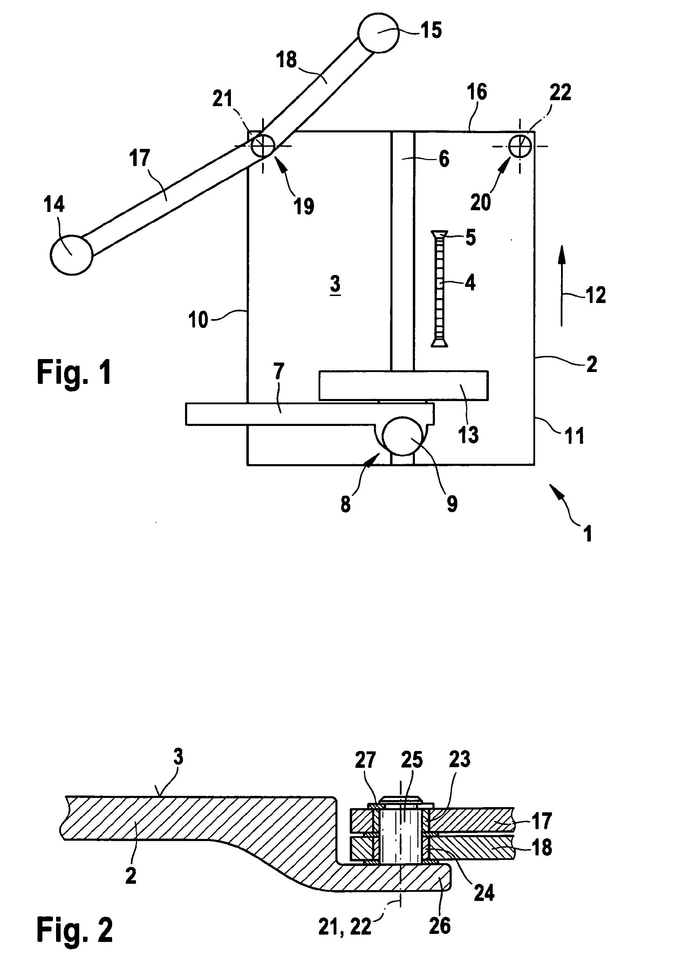

- Fig. 1: in schematisierter Darstellung, den Arbeitstisch einer Tischkreissäge in Draufsicht auf dessen Tischfläche, die in die Tischfläche eingelassene, parallel zur Sägeblattebene verlaufende Führung für einen Schiebeanschlag und eine Werkstückabstützung, die Teil einer die Tischfläche umfassenden Werkstückauflage ist und die über einen Schwenkarm über die Tischfläche auskragend am Arbeitstisch angelenkt ist,

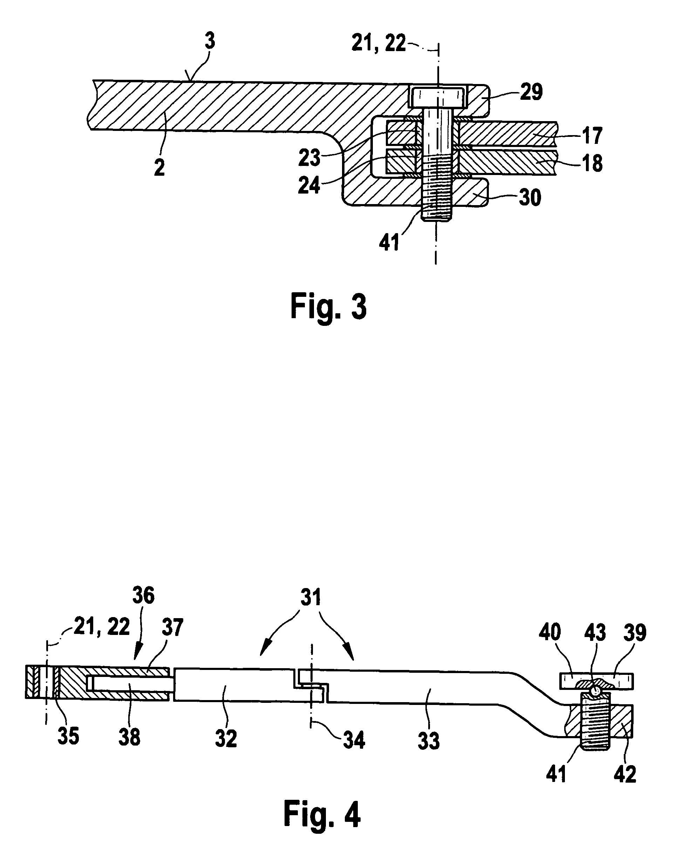

- Fig. 2 und 3: schematische, vereinfachte Darstellungen möglicher Ausgestaltungen der Anlenkung von Schwenkarmen am Arbeitstisch, insbesondere im eckseitigen Bereich der Tischfläche, und
- Fig. 4: eine vereinfachte Darstellung eines mehrgliedrigen, hier zweigliedrigen Schwenkarmes mit Verbindung der Armglieder zueinander über eine zur Schwenkachse des Schwenkarmes parallele Schwenkachse, wobei zumindest eines der Armglieder längenverstellbar, insbesondere teleskopisch ausgebildet ist und der Schwenkarm im Bereich seines freien Endes eine Werkstückabstützung trägt, die zum Schwenkarm höhenverstellbar und bevorzugt gelenkig gelagert ist.

In Fig. 1 ist der Arbeitstisch einer als Kreissäge ausgebildeten Werkzeugmaschine mit 1 bezeichnet. Eine ein- oder mehrteilig ausgebildete Tischplatte 2 weist eine Tischfläche 3 auf. Über die Tischfläche 3 steht zumindest im Arbeitsbetrieb das jeweilige Arbeitssegment eines Sägeblattes 4 über, das die Tischplatte 2 in einer entsprechend bemessenen, lang gestreckten Ausnehmung 5 durchsetzt. Gezeigt ist das Sägeblatt 4 in seiner zur Tischfläche 3 senkrechten Stellung. Unter anderem zur Durchführung von Gehrungsschnitten kann das Sägeblatt 4 um eine zur Tischfläche 3 parallel laufende Schwenkachse verschwenkbar und auf verschiedene Winkelstellungen zur Tischfläche 3 einstellbar sein. Die entsprechenden Stell- und Tragvorrichtungen sind ebenso wie der Unterbau des Arbeitstisches 1 in der Darstellung gemäß Fig. 1 von der Tischplatte 2 überdeckt und nicht gezeigt.

Parallel zum Sägeblatt 4 bzw. der Ausnehmung 5 für dieses verlaufend erstreckt sich ein kanalartiger Ausschnitt 6, der als der Tischplatte 2 zugeordnete Führungsnut für einen Schiebeanschlag 7 ausgebildet sein kann oder auch die Zugangsöffnung zu einer anderweitigen, im Ausschnittsbereich und bevorzugt unterhalb der Tischplatte 2 vorgesehene Längsführung, insbesondere Schiebelängsführung für den Schiebeanschlag 7 bildet. Angedeutet ist in Fig. 1 die Handhabe 9 einer Klemmvorrichtung 8, über die der Schiebeanschlag 7 zur zugeordneten, nicht dargestellten Längsführung fixierbar ist, und dies bevorzugt auch in verschiedenen Winkelstellungen zur über den kanalartigen Ausschnitt 6 zugänglichen Führungsnut bzw. Längsführung, die sich parallel zu den Längskanten 10, 11 der Tischplatte 2 in der durch den Pfeil 12 veranschaulichten Arbeitsrichtung erstreckt. Dem Schiebeanschlag 7 vorgelagert ist symbolisch ein Werkstück 13 angedeutet, das auf der Tischfläche 3 aufliegt, so dass die Tischfläche 3 als Werkstückauflage dient.

Die Größe der Tischfläche 3 ist insbesondere bei transportablen Arbeitstischen 1 schon aus Gewichtsgründen beschränkt. Darüber hinaus ergeben sich bei Arbeitstischen 1 bezüglich der Tischfläche 3 generell auch dann Beschränkungen, wenn kleinere Werkstücke zu ihrer Handhabung den Zugriff auf den Nahbereich zum Sägeblatt 4 bedingen. Entsprechend bemessene Arbeitstische 1 bieten bezüglich ihrer Tischfläche 3 als Werkstückauflage aber keine hinreichende Abstützung und Führung für große, in der Zeichnung nicht dargestellte Werkstücke, die über die Tischfläche 3 seitlich und/oder entsprechend der jeweiligen Arbeitslage zum Sägeblatt 4 längsseits auskragen, wobei insbesondere größere Ausladungen solcher Werkstücke in Arbeitsrichtung 12 über die Tischfläche 3 hinaus bei zunehmend verkürztem Abstützhebelarm für den Benutzer eine ausreichende Führung und Abstützung des Werkstückes durch den Benutzer sehr erschweren.

Erfindungsgemäß wird dem dadurch abgeholfen, dass auskragend über die Tischplatte 2 zur Vergrößerung der Werkstückauflage Werkstückabstützungen 14, 15 vorgesehen sind, und zwar im seitlich rückwärtigen, also im hinteren Bereich zur Tischfläche 3 bei zur Tischfläche 3 bezogen auf das jeweilige Werkstück und dessen Formgebung entsprechender Höhenlage. Insbesondere für seitlich zur Tischplatte 2 liegende Werkstückabstützungen 14 kommen dabei auch Abstützlagen in Frage, die zur Tischfläche 3 in Anpassung an die Werkstückform bei Auflage des Werkstücks auf der Tischfläche 3, zur Tischfläche 3 deutlich höhenversetzt sind. Ein vergleichbarer Höhenversatz kommt für die rückwärtig zur hinteren Kante 16 liegende Werkstückabstützung 15 im Regelfall nicht in Frage, wenn das Werkstück 13 entsprechend dem Sägefortschritt in Arbeitsrichtung 12 über die Tischfläche 3 auswandert und nun von der Werkstückabstützung 15 abgefangen werden soll.

Eine entsprechende Höhenverstellbarkeit der Werkstückabstützungen 14, 15 zu den zugehörigen Schwenkarmen 17, 18, über die die Abstützungen 14, 15 mit dem Arbeitstisch 1 schwenkbar verbunden sind, ist zweckmäßig.

Die Schwenkarme 17, 18 sind im zur hinteren Kante 16 auslaufenden rückwärtigen Bereich des Arbeitstisches 1 an diesem angelenkt. Veranschaulicht bzw. angedeutet sind diesbezüglich Anlenkungen 19, 20 in den rückwärtigen Eckbereichen der Tischplatte 2.

Dargestellt ist in Fig. 1 die gemeinsame und koaxiale Lagerung der beiden Schwenkarme 17, 18 über eine Anlenkung 19. Im Rahmen der Erfindung liegt es, in beiden Anlenkungen 19, 20 jeweils mehrere Schwenkarme, so beispielsweise Schwenkarme 17, 18 mit zugehörigen Werkstückabstützungen 14, 15 zu lagern.

Beispiele für die in Fig. 1 lediglich schematisch angedeuteten Anlenkungen 19, 20 mit zur Tischfläche 3 senkrechten Schwenkachsen 21, 22 zeigen Fig. 2 und 3, die jeweils den Bereich einer solchen Anlenkung zur Tischplatte 2, beispielsweise im Eckbereich einer Tischplatte 2, darstellen.

In der Darstellung gemäß Fig. 2 sind hierbei die nur angedeuteten Schwenkarme 17, 18 über Augen 23, 24 in auf einem Tragbolzen 25 aufgefädelter Lage gezeigt. Der Tragbolzen 25 ist unterhalb der Tischfläche auf einem Tragfortsatz 26 der Tischplatte vorgesehen, zu dem die Schwenkarme 17, 18 drehbar, aber axial lagefest abgestützt sind, beispielsweise über eine endseitig zum Tragbolzen 25 vorgesehene Sprengringanordnung 27 oder dergleichen.

Während bei der Ausgestaltung gemäß Fig. 2 in den Anlenkungen 21, 22 die Schwenkarme 17, 18 auf den unterhalb der Tischfläche 3 endenden Tragbolzen 25 aufgefädelt sind und in der jeweiligen Eckzone, oder auch über diese auskragend, auf dem nach unten zur Tischfläche 3 abgesetzten Tragfortsatz 26 aufliegen, ist bei der Ausgestaltung Fig. 3 keine nach oben offene Aufnahme für die Schwenkarme 17, 18 im Bereich ihrer Augen 23, 24 gegeben, sondern vielmehr eine Aufnahme durch eine Gabelanordnung mit oberer und unterer Überdeckung zu den Augen 23, 24, die von einem in den Gabelarmen 29, 30 geführten Tragbolzen 41 durchsetzt und gegen die Tischplatte 2 schwenkbar befestigt sind. So lässt sich in einfacher Weise auch im Bereich der Anlenkungen 19, 20 eine seitens der Tischfläche 2 gegebene Überdeckung erreichen. In beiden Fällen sind die Schwenkarme 17, 18 ohne Schwierigkeiten zu montieren und zu demontieren, so dass auch, beispielsweise zu Transportzwecken, eine einfache Trennung von der Tischplatte 2 vorzunehmen ist.

Fig. 4 dient der Veranschaulichung eines Schwenkarmes 31 in gegliederter Bauweise, sowie der Veranschaulichung einer längenverstellbaren, insbesondere teleskopischen Ausbildung eines Schwenkarmes oder eines Gliedes eines Schwenkarmes, sowie auch der Veranschaulichung der Verbindung einer Werkstückabstützung 14 bzw. 15 zu einem Schwenkarm bzw. dem Glied eines Schwenkarmes.

In Fig. 4 umfasst der Schwenkarm 31 als Gliederarm zwei Armglieder 32, 33, die über eine Schwenkachse 34 schwenkbar verbunden sind. Das eine Armglied 32 ist zur Anlenkung gegenüber dem in Fig. 4 nicht dargestellten Arbeitstisch mit einem Auge 35 endseitig versehen und über dieses Auge 35 bei paralleler Lage der Schwenkachsen 34, 35 unter Vermittlung eines nicht dargestellten Bolzens oder dergleichen am Arbeitstisch anzulenken. Dargestellt ist dieses Armglied 32 in einer längenverstellbaren Ausgestaltung. Diese ist symbolisiert durch eine Teleskopführung 36 mit in einer buchsenartigen Aufnahme 37 unrunden Querschnittes geführtem Zapfen 38, also durch eine nicht verdrehbare Teleskopführung.

Das Armglied 33 läuft endseitig in einer Abstützung 39 aus, symbolisiert durch ein Stützglied in Form eines Stütztellers 40, der über einen Gewindebolzen 41 zum abgekröpften Ende 42 des Armgliedes 33 höhenverstellbar ist. Bevorzugt ist der Stützteller 40 zum Gewindebolzen 41 über eine Gelenkverbindung 43, beispielsweise eine Kugelverbindung gelenkig abgestützt. Aufgrund der Längsverstellbarkeit zumindest eines der Armglieder 32, 33, aber auch bei eingliedrigem, längenverstellbarem Schwenkarm 17 bzw. 18, ist auch bei zum Werkstück 13 lagefester Positionierung der Werkstückabstützung 14, 15; 39 eine dem Werkstück 13 folgende Abstützung über den Vorschubweg des Werkstückes 13 erreichbar, wobei eine mehrgliedrige Ausbildung des Schwenkarmes, wie für den Schwenkarm 31 mit den Armgliedern 32, 33 veranschaulicht, diesbezüglich verbesserte Führungsmöglichkeiten eröffnet.

Die Schwenkarme 17, 18 und/oder 31 selbst können, beispielsweise bei zumindest teilweise insbesondere in Hochrichtung nach oben ausgekröpftem Verlauf, einen Teil der Werkstückauflage bilden, so dass diese im Rahmen der Erfindung durch die Tischfläche und einen oder mehrere Schwenkarme und/oder die Tischfläche, einen oder mehrere Schwenkarm(e) und eine oder mehrere über einen jeweiligen Schwenkarm getragene Werkstückabstützung(en) gebildet ist.

## Patentansprüche

1. Arbeitstisch für Werkzeugmaschinen, insbesondere Kreis - und/oder Kappsägen, mit einer Werkstückauflage, die durch eine Tischfläche (3) und außerhalb der Tischfläche (3) liegende Werkstückabstützungen (14, 15) gebildet ist, welche jeweils über einen Schwenkarm (17, 18) parallel zur Tischfläche (3) verschwenkbar untergreifend zur Tischebene am Arbeitstisch (1) gelagert sind,
**dadurch gekennzeichnet, dass** die, insbesondere zwei, Werkstückabstützungen (14, 15) über ihre Schwenkarme (17, 18) mittels einer gemeinsamen Lagerung koaxial und in ihrer Winkellage zueinander verstellbar in einem Randbereich der Tischfläche (3) des Arbeitstisches (1) angeordnet sind, wobei dieser Randbereich durch einen zur hinteren Kante (16) des Arbeitstisches (1) auslaufenden rückwärtigen Eckbereich der Tischplatte (2) gebildet ist.

2. Arbeitstisch nach Anspruch 1,
**dadurch gekennzeichnet, dass** ein ein- oder mehrgliedrig aufgebauter Schwenkarm (17, 18; 31) durch teleskopische Ausbildung mindestens eines Armgliedes (32) längenveränderlich ist.

3. Arbeitstisch nach Anspruch 1 oder 2,
**dadurch gekennzeichnet, dass** ein mehrere Armglieder (32, 33) umfassender Schwenkarm (31) durch Faltung seiner Armglieder (32, 33) längenveränderlich ausgebildet ist.

4. Arbeitstisch nach einem der vorhergehenden Ansprüche,
**dadurch gekennzeichnet, dass** eine Werkstückabstützung durch einen Schwenkarm (17, 18; 31) oder einen Bereich eines Schwenkarmes (17, 18; 31) gebildet ist.

5. Arbeitstisch nach einem der vorhergehenden Ansprüche,
**dadurch gekennzeichnet, dass** eine Werkstückabstützung (14, 15; 39) zumindest ein durch den Schwenkarm (17, 18; 31) getragenes Stützglied umfasst, das zum Schwenkarm (31) gelenkig abgestützt ist.

6. Arbeitstisch nach einem der vorhergehenden Ansprüche,
**dadurch gekennzeichnet, dass** ein Schwenkarm in seiner Höhenlage zum Arbeitstisch (3) verstellbar angeordnet ist.

7. Arbeitstisch nach einem der Ansprüche 5 oder 6,
**dadurch gekennzeichnet, dass** ein Stützglied zum Schwenkarm (31) höhenverstellbar ist.

## Claims

1. Workbench for machine tools, in particular circular and/or cross-cut saws, having a workpiece-bearing means which is formed by a bench surface (3) and workpiece supports (14, 15) which are located outside the bench surface (3) and are mounted on the workbench (1), to engage beneath the bench plane, such that they can be pivoted parallel to the bench surface (3) in each case via a pivoting arm (17, 18),
**characterized in that** the, in particular two, workpiece supports (14, 15) are arranged in a peripheral region of the bench surface (3) of the workbench (1) such that they can be adjusted coaxially and in their angular position in relation to one another via their pivoting arms (17, 18), by means of a common mount, wherein this peripheral region is formed by a rear corner region of the bench top (2), which runs to the rear edge (16) of the workbench (1).

2. Workbench according to Claim 1,
**characterized in that** a pivoting arm (17, 18; 31) constructed with one or more links can be changed in length by the telescopic design of at least one arm link (32).

3. Workbench according to Claim 1 or 2,
**characterized in that** a pivoting arm (31) comprising a plurality of arm links (32, 33) is designed such that it can be changed in length by virtue of its arm links (32, 33) being folded.

4. Workbench according to one of the preceding claims,
**characterized in that** a workpiece support is formed by a pivoting arm (17, 18; 31) or a region of a pivoting arm (17, 18; 31).

5. Workbench according to one of the preceding claims,
**characterized in that** a workpiece support (14, 15; 39) comprises at least one supporting member, which is borne by the pivoting arm (17, 18; 31) and is supported in an articulated manner in relation to the pivoting arm (31).

6. Workbench according to one of the preceding claims,
**characterized in that** a pivoting arm is arranged such that it can be adjusted in height in relation to the workbench (1).

7. Workbench according to either of Claims 5 and 6, **characterized in that** a supporting member can be adjusted in height in relation to the pivoting arm (31).

## Revendications

1. Table de travail pour machines-outils, notamment pour scies circulaires et/ou scies oscillatoires, comprenant un porte-pièce qui est formé par une surface de table (3) et des supports de pièce (14, 15) situés en dehors de la surface de table (3), lesquels sont supportés sur la table de travail (1) à chaque fois par le biais d'un bras pivotant (17, 18) de manière à pouvoir pivoter parallèlement à la surface de table (3) en venant en prise par le dessous par rapport au plan de la table,
**caractérisée en ce que** les supports de pièce (14, 15), notamment au nombre de deux, sont disposés de manière déplaçable l'un par rapport à l'autre par le biais de leurs bras pivotants (17, 18) coaxialement et dans leur position angulaire au moyen d'un support sur palier commun dans une région de bord de la surface de table (3) de la table de travail (1), cette région de bord étant formée par une région de coin arrière du plateau de table (2) se terminant à l'arête arrière (16) de la table de travail (1).

2. Table de travail selon la revendication 1,
**caractérisée en ce qu'**un bras pivotant (17, 18 ; 31) construit à partir d'un ou plusieurs organes est variable en longueur par réalisation télescopique d'au moins un organe du bras (32).

3. Table de travail selon la revendication 1 ou 2,
**caractérisée en ce qu'**un bras pivotant (31) comprenant plusieurs organes de bras (32, 33) est réalisé de manière variable en longueur par pliage de ses organes de bras (32, 33).

4. Table de travail selon l'une quelconque des revendications précédentes, **caractérisée en ce qu'**un support de pièce est formé par un bras pivotant (17, 18 ; 31) ou une région d'un bras pivotant (17, 18 ; 31).

5. Table de travail selon l'une quelconque des revendications précédentes, **caractérisée en ce qu'**un support de pièce (14, 15 ; 39) comprend au moins un organe de support porté par le bras pivotant (17, 18 ; 31), lequel est supporté de manière articulée par rapport au bras pivotant (31).

6. Table de travail selon l'une quelconque des revendications précédentes, **caractérisée en ce qu'**un bras pivotant est disposé de manière réglable dans sa position en hauteur par rapport à la table de travail (1).

7. Table de travail selon l'une quelconque des revendications 5 ou 6,
**caractérisée en ce qu'**un organe de support peut être déplacé en hauteur par rapport au bras pivotant (31).
